# EUROPÄISCHE PATENTSCHRIFT

(11) **EP 0 340 499 B1**
(45) Veröffentlichungstag und Bekanntmachung des Hinweises auf die Patenterteilung: **21.07.1993**
(21) Anmeldenummer: 89106594.8
(22) Anmeldetag: 13.04.1989
(51) Int. Cl.: F16L 37/14, F16L 55/16, F16L 13/00

(54) **Rohrverbindung**
Pipe joint
Raccord de tuyaux

(30) Priorität: 03.05.1988 DE 3814913
(43) Veröffentlichungstag der Anmeldung: 08.11.1989
(73) Patentinhaber: REHAU AG + Co, 95111 Rehau (DE)
(72) Erfinder:

(56) Entgegenhaltungen:
- DE-A- 2 242 928
- DE-A- 3 127 079
- DE-A- 3 301 242
- DE-B- 1 525 525

## Beschreibung

Die Erfindung betrifft eine Rohrverbindung zweier Vortriebsrohre oder dergleichen, bei der bei zusammengesetzten Rohren ein auf einer Seite des einen Rohres ausgebildetes Steckende in ein auf einer Seite des zweiten Rohres ausgebildetes Muffenende eingreift, wobei am Steck- bzw am Muffenende die Wandstärke der Rohre durch eine radial nach innen bzw. radial nach außen abgesetzte Stufe reduziert ist und die Stufenhohe der Stufe am Steckende mit der Stufenhöhe der Stufe am Muffenende übereinstimmt, wobei bei zusammengesetzten Rohren zwischen dem freien Ende des Steckendes und dem benachbarten Bereich des Muffenendes ein flexibles Dichtelement eingesetzt ist, und wobei mit Abstand vom freien Ende des Steckendes und mit Abstand vom freien Ende des Muffenendes am äußeren Umfang des Steckendes und am inneren Umfang des Muffenendes jeweils eine Aufnahmenut angeordnet ist, die beim Anschlag des freien Endes des Muffenendes an der durch die Stufe gebildeten Anlageschulter des Steckendes eine Aufnahmekammer bilden, in die bei zusammengesetzten Rohren ein über eine Rohrwandöffnung von außen eingesetztes Sperrelement eingelassen ist.

Dem Sanieren von undichten Flüssigkeitsleitungen wie Abwasserkanälen usw. kommt in jüngster Zeit mehr und mehr Bedeutung zu. Hierzu wurden verschiedene Sanierungsverfahren entwickelt, wobei die Reparatur verlegter Leitungen mit kurzen Rohrabschnitten - in der Fachsprache "Kurzrohr-Relining" benannt - eine herausragende Bedeutung verlangt hat.

Bei diesem Verfahren werden kurze Rohrabschnitte in die defekten Rohrleitungsstränge ohne Ausgrabungsarbeit über die Kontrollschächte des bestehenden Rohrleitungssystems eingepresst. Da diese Kontrollschächte jedoch nur begrenzte lichte Abmessungen aufweisen, ist auch die mögliche Einbaulänge der einzelnen Rohrabschnitte begrenzt. Hier werden relativ kurze Rohrstücke von ca. 1 m Länge eingesetzt.

Diese Sperrelemente sind an den Enden angeschärfte Riegelkörper, welche in die von den Aufnahmenuten gebildete Aufnahmekammer eingetrieben werden.

Aus der DE-B 1 525 525 ist eine Rohrverbindung mit Verbindungselementen an den jeweils freien Enden der Einzelrohre sowie einem flexiblen Dichtelement zum Abdichten zusammengesetzter Rohre im Verbindungsbereich bekannt. Die Rohrwand der Einzelrohre ist an wenigstens einem freien Ende spiegelbildlich zum übergreifenden Muffenende in Teilstufen von übereinstimmender Länge und Tiefe zurückversetzt. Im definierten Abstand vom freien Ende des Muffenendes und vom freien Ende des Steckendes ist am inneren Umfang jeweils eine zusätzliche Aufnahmenut zur Bildung einer Aufnahmekammer für ein von außen über eine Rohrwandöffnung einsetzbares Sperrelement in die verbleibende Rohrwand eingelassen und das Dichtelement ist zwischen dem freien Ende des Steckendes und der Anlageschulter des Muffenendes eingesetzt.

Bei dieser Art von Steckverbindung wird am Ende des Steckvorgangs der spiegelbildlich geformten Rohrenden kein Pressdruck in axialer Richtung auf das Dichtelement ausgeübt, so daß keine Gewähr einer absoluten Dichtheit der geschaffenen Rohrverbindung besteht.

Der Erfindung liegt die Aufgabe zu Grunde, eine Rohrverbindung der eingangs genannten Art zu schaffen, bei der sich die beiden Rohre unter Bildung einer axialen Verpressung des Dichtringes auf einfache Weise druck- und zugfest miteinander verbinden lassen.

Erfindungsgemäß wird diese Aufgabe dadurch gelöst, daß die axiale Länge des abgestuften Bereichs des Steckendes kürzer ist als die axiale Länge des abgestuften Bereichs des Muffenendes, und daß das Dichtelement bei zusammengesetzten Rohren einerseits vom freien Ende des Steckendes und andererseits von der Anlageschulter des Muffenendes im Preßsitz gehalten ist.

Die erfindungsgemäße Rohrverbindung wird an Rohren eingesetzt werden, die einerseits ein Steckende und andererseits ein Muffenende aufweisen. Die Wandstärke ist am Muffenende durch eine radial nach außen und am Steckende durch eine radial nach innen abgesetzte Stufe reduziert. Das Steckende läßt sich in das Muffenende schieben, wobei die freiliegenden Flächen aufeinandergleiten und die Aufnahmenuten die Aufnahmekammer für das von außen über die Rohrwandöffnung einsetzbare Sperrelement bilden. Dieses Sperrelement kann - da die beiden Aufnahmenuten beim Anschlag des freien Endes des Muffenendes an der Anlageschulter des Steckendes exakt übereinanderliegen - von außen problemlos über die tangentiale Rohrwandöffnung in die Aufnahmekammer eingeschoben werden.

Es hat sich als vorteilhaft herausgestellt, daß das Dichtelement bei zusammengesetzten Rohren seitlich vom freien Ende des Steckendes und von der Anlageschulter des Muffenendes begrenzt ist. Um Fertigungstoleranzen, Verformungen der Rohrverbindung durch axiale Last oder Biegebeanspruchung aufnehmen zu können, ohne undicht zu werden, ist eine möglichst großvolumige Dichtung erforderlich. Hier kann davon ausgegangen werden, daß eine auf Dauerdichtheit ausgelegte Kompressionsdichtung eine Maximalverpressung von 30% des ursprünglichen Querschnittes aufnehmen kann, ohne auf Dauer gesehen durch bleibende Verformung zu versagen. Um eine absolute Dichtheit zu erreichen, ist eine Mindestverpressung einer Kompressionsdichtung von etwa 10% notwendig, d.h. es bleibt für die Aufnehme der vorgenannten Toleranzen aus Fertigung und Verformung etwa 20% der Dichtringhöhe für eine Verpressung zur Verfügung.

Beim Anschlag des freien Endes des Muffenendes an der Anlageschulter des Steckendes ist die Verpressung des zwischen dem freien Ende des Steckendes und der Anlageschulter des Muffenendes eingesetzten Dichtrings erfolgt.

Da bei dieser Verpressung der Dichtring in den lichten Innenraum der Rohrleitung ausweicht, erscheint es weiter zweckmäßig, die Dichtung nicht in die Trennfuge zwischen der Anlageschulter des Muffenendes und dem freien Ende des Steckendes zu legen, sondern in die Anlageschulter des Muffenendes in Richtung entlang der Rohrachse eine Einstecknut für das Dichtelement einzulassen. Diese Nut ist so tief, daß Teilbereiche des Dichtelementes nach außen zum freien Ende des Steckendes ragen. Der überstand soll dabei so groß sein, daß die Maximalverpressung des Dichtringes von 30% erfolgen kann.

Eine weitere Möglichkeit des Einsatzes des Dichtelementes ist dadurch gegeben, daß im Bereich der Anlageschulter des Muffenendes in radialer Richtung eine Einstecknut für das Dichtelement in die Rohrwand eingelassen ist. Auch hier muß die maximale Verpreßbarkeit von 30% berücksichtigt werden. Vorteilhaft ist bei dieser Ausführungsart das freie Ende des Steckendes zur Dichtung hin abgeschrägt, so daß eine bessere Verpressung der Dichtung erfolgen kann.

Die beiden letztgenannten Dichtungsmöglichkeiten bezeichnen eine Lagesicherung des Dichtringes, so daß ein Herausdrücken oder Herausziehen durch bestimmte Betriebsbedingungen nicht möglich ist. Außerdem kann durch diese Dichtungsart der zwischen dem Steckende und dem Muffenende im zusammengeschobenen Zustand entstehende Spalt entsprechend der zu berücksichtigenden Maximalverpressung von 30% des Dichtringes klein gehalten werden.

Mit der erfindungsgemäßen Rohrverbindung wird eine Verbindungsmöglichkeit geschaffen, bei der weder an der Rohraußenseite noch am Innendurchmesser eine Stufe auftritt. Dieser Vorteil kann erzielt werden, wenn das eine Rohrende als Steckende und das andere Rohrende als Muffenende ausgebildet wird. Es können jedoch auch beide Rohrenden als Steckenden geformt werden, wenn z.B. eine Doppelsteckmuffe die Verbindung zweier solcher Rohrteile übernimmt. Die Verbindung selbst und ihre Möglichkeiten bleiben dabei die gleichen.

Durch den glatten, stufenlosen übergang an der Rohraußenseite von einem Rohr zum nachfolgenden Rohr wird das Einschieben bzw. das Einziehen der Rohre in das zu sanierende Rohr erheblich erleichtert. Die gleichen Vorteile ergeben sich bei der direkten, grabenlosen Verlegung von Rohrleitungen, z.B. beim Durchpressen von Rohren durch einen mit unterschiedlichen Verfahren herstellbaren Erdkanal.

Wird an der Rohrinnenseite im Bereich der Muffenverbindung der Rohrquerschnitt eingeengt, so entstehen neben Querschnittsverlusten und damit erhöhten Druckverlusten bei Freispiegelleitungen zusätzlich in jedem einzelnen Rohrabschnitt Bereiche, in denen das Wasser nicht abfließen kann, d.h. im Rohrleitungssystem bleibt Wasser stehen. Da solche "Wassersäcke" in Abwassersystemen unbedingt vermieden werden müssen, bietet die erfindungsgemäße Rohrverbindung auch hier einen erheblichen Vorteil, denn auch nach innen erfolgt ein stufenloser übergang von Rohr zu Rohr.

Schließlich ist als vorteilhaft herauszustellen, daß die erfindungsgemäße Rohrverbindung sowohl zum Durchdrücken als auch zum Durchziehen gleichermaßen geeignet ist. Die Verbindung ist geeignet, die beim Durchziehen oder Durchdrücken entstehenden hohen Zug- oder Druckbelastungen an den Muffenverbindungen aufzunehmen, da hier das in der Aufnahmekammer unbewegbar festgelegte Sperrelement eine kraftschlüssige Verriegelung der aneinander festgelegten Rohrabschnitte bewirkt.

Die erfindungsgemäße Rohrverbindung kann im Grundsatz bei Rohren aus unterschiedlichen Materialien wie thermoplastische oder duroplastische Kunststoffe, Faserzement, Stahl, Beton angewendet werden. Dabei ist die Dimensionierung des Muffensystems dem Festigkeitsverhalten des jeweiligen Materials anzupassen.

In der Zeichnung sind Ausführungsbeispiele der erfindungsgemäßen Rohrverbindung schematisch dargestellt; es zeigt:
Fig.1 ein Rohr mit teilgeschnittenen Bereichen des Muffenendes bzw. des Steckendes.
Fig.2 einen Teilquerschnitt der Rohrverbindung mit in die Aufnahmekammer eingeschobenem Sperrelement.
Fig.3 einen Teillängsschnitt durch eine Rohrverbindung mit Sperrelement und Dichtring.
Fig.4 einen Teillängsschnitt gemäß Fig.3 mit spezieller Dichtringaufnahme.
Fig.5 einen Teillängsschnitt gemäß Fig.3 mit weiterer spezieller Dichtringaufnahme.

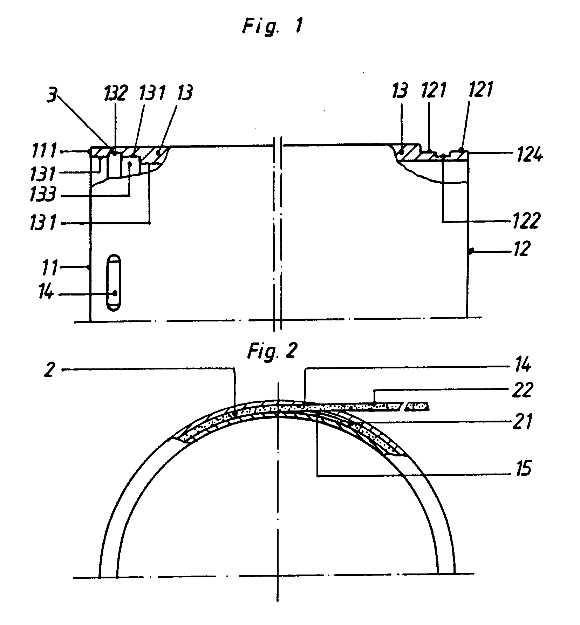

In Fig.1 Ist das Rohr 1 mit seinem Muffenende 11 und dem Steckende 12 abgebildet. Das Rohr 1 hat eine Wandstärke 13. Am Muffenende 11 und am Steckende 12 sind Bereiche 131, 132, 121, 122 mit reduzierter Wandstärke. Im Muffenende 11 ist direkt über der Aufnahmenut 133 und mit dieser fluchtend eine Rohrwandöffnung 14 tangential von außen in die Rohrwand eingelassen. Die Rohrwandöffnung 14 hat einen vorgegebenen Längsausdehnungsbereich und erstreckt sich durch die Rohrwand bis in die Aufnahmenut 133.

In Fig.2 ist die Verbindung zweier Rohre 1 gemäß Fig.1 im Teilquerschnitt dargestellt. Der Teilquerschnitt zeigt die Situation, bei der das Steckende 12 eines Rohres 1 in das Muffenende 11 eines nachfolgenden Rohres 1 eingeschoben ist. Dieser Einschiebevorgang ist beendet, wenn die Nut 133 des Muffenendes 11 exakt über der Nut 123 des Steckendes 12 liegt. Die beiden Aufnahmenuten 123, 133 bilden dabei die Aufnahmekammer 15 für das Sperrelement 2. Das Sperrelement 2 ist von seinen Abmessungen her so gestaltet, daß es ohne Schwierigkeiten durch die Rohrwandöffnung 14 in die Aufnahmekammer 15 eingeschoben werden kann. Das Sperrelement 2 besitzt an seinem Einführungsende eine Anfasung 21 zur leichteren Einführung in die Rohrwandöffnung 14 und zur leichteren Durchführung durch die Aufnahmekammer 15. An seinem entgegengesetzten freien Ende ist zurückversetzt eine Sollbruchstelle 22 eingeformt, an der der überstand des Sperrelementes 2 abgebrochen wird, nachdem das freie Ende mit seiner Anfasung 21 an dem Sperrelement 2 im Bereich der Rohrwandöffnung 14 wieder anstößt.

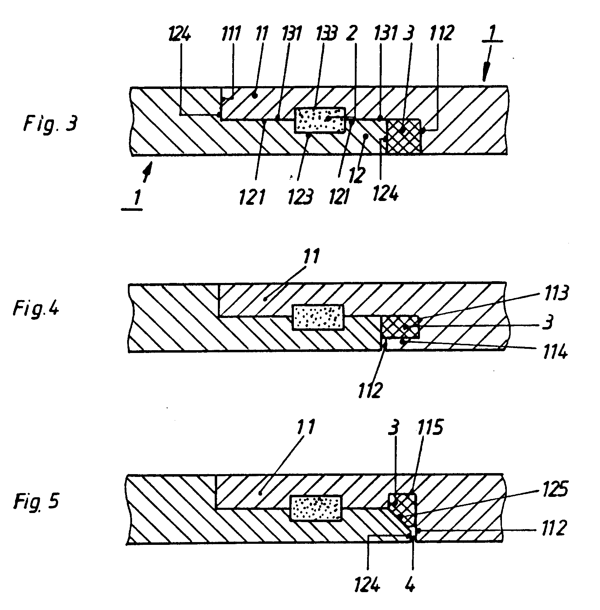

Fig.3 zeigt die Einbausituation des Muffenendes 11 des Rohres 1 und des Steckendes 12 des korrespondierenden Rohres 1. Das freie Ende 111 des Muffenendes 11 schließt in der gezeigten Darstellung an die Anlageschulter 124 des Steckendes 12 an. Die Bereiche 121 des Steckendes 12 und 131 des Muffenendes 11 liegen hierbei exakt aneinander an. Die Aufnahmenuten 123, 133 bilden die Aufnahmekammer 15 für das Sperrelement 2, welches in der Darstellung in die Aufnahmekammer 15 eingesetzt ist. (vgl. Fig.2). Das freie Ende 124 des Steckendes 12 ist gegenüber dem freien Ende 111 des Muffenendes 11 zurückversetzt dargestellt. In den dadurch geschaffenen Aufnahmeraum ist das Dichtelement 3 eingesetzt, welches einerseits vom freien Ende 124 des Steckendes 12 und andererseits von der Anlageschulter 112 des Muffenendes 11 unter Spannung gehalten wird.

Fig.4 zeigt im Teillängsschnitt gemäß Fig.3 eine spezielle Aufnahme des Dichtringes 3. Hierzu ist in die Anlageschulter 112 des Muffenendes 11 in axialer Richtung eine Einstecknut 113 eingelassen. Die Einstecknut 113 ist derart in die Anlageschulter 112 eingelassen, daß nach innen zum lichten Querschnitt des Rohres 1 ein Restwandbereich 114 stehen bleibt, der stark genug ist, um die maximale Verpressung des Dichtrings aufzunehmen.

In Fig.5 schließlich ist eine weitere Möglichkeit der Aufnahme des Dichtringes 3 dargestellt. Hier ist in das Muffenende 11 im Bereich der Anlageschulter 112 in radialer Richtung eine Einstecknut 115 für den Dichtring 3 eingebracht. Die maximale Tiefe dieser Einstecknut 115 entspricht dabei der maximalen Tiefe der Aufnahmenut 133. Das freie Ende 124 des Steckendes 12 verläuft hierbei in einer zum Dichtring 3 gerichteten Schräge 125.

Durch die Schräge 125 wird einerseits eine Verpressung des Dichtringes 3 in axialer und radialer Richtung erreicht, wobei zusätzlich die erforderliche Kraft für die Verformung des Dichtrings 3 reduziert wird. Durch den geringen verbleibenden Spalt 4 zwischen der Anlageschulter 112 des Muffenendes 11 einerseits und dem gegenüberliegenden freien Ende 124 des Steckendes 12 wird ein Austreten des Dichtringes 3 durch widrige Betriebsbedingungen sicher vermieden. Gleichzeitig wird durch diesen Spalt 4 erreicht, daß die Maximalverpressung des Dichtringes 3 bei der Kompression aufgefangen werden kann, ohne daß sich die freien Enden 112, 124 berühren.

## Patentansprüche

1. Rohrverbindung zweier Vortriebsrohre oder dergleichen, bei der bei zusammengesetzten Rohren ein auf einer Seite des einen Rohres ausgebildetes Steckende in ein auf einer Seite des zweiten Rohres ausgebildetes Muffenende eingreift, wobei am Steck- bzw. am Muffenende die Wandstärke der Rohre durch eine radial nach innen bzw. radial nach außen abgesetzte Stufe reduziert ist und die Stufenhöhe der Stufe am Steckende mit der Stufenhöhe der Stufe am Muffenende übereinstimmt, wobei bei zusammengesetzten Rohren zwischen dem freien Ende des Steckendes und dem benachbarten Bereich des Muffenendes ein flexibles Dichtelement eingesetzt ist, und wobei mit Abstand vom freien Ende des Steckendes und mit Abstand vom freien Ende des Muffenendes am äußeren Umfang des Steckendes und am inneren Umfang des Muffenendes jeweils eine Aufnahmenut angeordnet ist, die beim Anschlag des freien Endes des Muffenendes an der durch die Stufe gebildeten Anlageschulter des Steckendes eine Aufnahmekammer bilden, in die bei zusammengesetzten Rohren ein über eine Rohrwandöffnung von außen eingesetztes Sperrelement eingelassen ist, dadurch gekennzeichnet, daß die axiale Länge des abgestuften Bereichs des Steckendes (12) kürzer ist als die axiale Länge des abgestuften Bereichs des Muffenendes (11), und daß das Dichtelement (3) bei zusammengesetzten Rohren (1) einerseits vom freien Ende (124) des Steckendes (12) und andererseits von der Anlageschulter (112) des Muffenendes (11) im Preßsitz gehalten ist.

2. Rohrverbindung nach Anspruch 1, dadurch gekennzeichnet, daß in die Anlageschulter (112) des Muffenendes (11) in Richtung entlang der Rohrachse eine Einstecknut (113) für das Dichtelement (3) eingelassen ist.

3. Rohrverbindung nach Anspruch 1, dadurch gekennzeichnet, daß im Bereich der Anlageschulter (112) des Muffenendes (11) in radialer Richtung eine Einstecknut (115) für das Dichtelement (3) in die Rohrwand eingelassen ist.

4. Rohrverbindung nach Anspruch 3, dadurch gekennzeichnet, daß am freien Ende (124) des Steckendes (12) über den Umfang verlaufend eine Wandabschrägung (125) angeordnet ist.

## Claims

1. Pipe coupling joining two thrust pipes or similar in which one end of one of the joined pipes is formed to a plug which engages one end of the second pipe which is formed as a socket, in which the wall thickness of each pipe at the plug end is radially reduced and at the socket end is radially enlarged to form a step the height of the step at the plug end matching the height of the step at the socket end, in which, when the pipes are joined, a flexible sealing element is interposed between the free end face of the plug end and the adjoining face of the socket end, and in which at a distance from the free end of the plug end and at a distance from the free end of the socket end, a recessed groove is arranged on both the external circumference of the plug end and on the internal circumference of the socket end, said groove forming an accommodation space when the contact face of the socket end abuts on the step formed on the plug end, said space accepting a closing element which, when the pipes are joined, is inserted from the outside through an opening in the pipe wall, said pipe coupling being characterised by the fact that the axial length of the stepped section of the plug end (12) is shorter than the axial length of the stepped section of the socket end (11) and that, with the pipes (1) joined, the sealing element (3) is clamped in position held at the one end by the contact face (124) of the plug end (12) and on the other by the contact shoulder (112) of the socket end (11).

2. Pipe coupling as in Claim 1, wherein an insert groove (113) is provided in the contact shoulder (112) of the socket end (11) running parallel to the pipe axis to accept the sealing element (3).

3. Pipe coupling as in Claim 1, wherein an insert groove (115) is provided in the region of the contact shoulder (112) of the socket end (11) arranged radially to accept the sealing element (3).

4. Pipe coupling as in Claim 3, wherein the contact face (124) of the plug end (12) is bevelled (125) around its whole circumference.

## Revendications

1. Raccord de tubes de deux tubes d'avancement ou similaires où, lorsque les tubes sont raccordés, une extrêmité du raccord, disposée sur un bout du premier tube, s'engrène dans une extrêmité du manchon disposée sur un bout du second tube, l'épaisseur de paroi des tubes étant réduite à l'extrêmité du raccord et du manchon par un gradin décalé radialement vers l'intérieur ou l'extérieur et la hauteur du gradin située à l'extrêmité du raccord correspondant à celle du gradin située à l'extrêmité du manchon, où un élément d'étanchéité flexible, lorsque les tubes sont raccordés, est disposé entre l'extrêmité libre de l'extrêmité de raccord et la zone voisine de l'extrêmité du manchon, et où, distantes de l'extrêmité libre de l'extrêmité du raccord et distantes de l'extrêmité libre de l'extrêmité du manchon, sont disposées, l'une sur la circonférence extérieure de l'extrêmité du raccord, l'autre sur la circonférence intérieure de l'extrémité du manchon, deux rainures de réception qui, lorsque l'extrêmité libre de l'extrêmité du manchon bute contre l'épaulement de l'extrêmité du raccord constitué par le gradin, forment une chambre de réception dans laquelle, lorsque les tubes sont raccordés, est introduit un élément de blocage, disposé de l'extérieur par une ouverture dans la paroi du tube, caractérisé par le fait que la longueur axiale de la zone graduée de l'extrêmité du raccord (12) est plus courte que la longueur axiale de la zone graduée de l'extrêmité du manchon (11), et que l'élément d'étanchéité (3), lorsque les tubes sont raccordés (1), est ajusté avec serrage d'une part par l'extrêmité libre (124) de l'extrêmité du raccord (12) et d'autre part par l'épaulement (112) de l'extrêmité du manchon (11).

2. Raccord de tubes d'après la revendication 1, caractérisé par le fait qu'une rainure d'emboîtement (113) est introduite pour l'élément d'étanchéité (3) dans l'épaulement (112) de l'extrémité du manchon (11) dans le sens de l'axe du tube.

3. Raccord de tubes d'après la revendication 1, caractérisé par le fait que, dans le domaine de l'épaulement (112) de l'extrêmité du manchon (11), une rainure d'emboîtement (115) est introduite pour l'élément d'étanchéité (3) dans la paroi du tube dans le sens radial.

4. Raccord de tubes d'après la revendication 3, caractérisé par le fait qu'un chanfrein de la paroi (125) est disposé le long de la circonférence à l'extrémité libre (124) de l'extrêmité du raccord (12).
